# EUROPEAN PATENT APPLICATION

(11) **EP 4 729 948 A1**
(43) Date of publication of application: **22.04.2026**
(21) Application number: 24207365.8
(22) Date of filing: 18.10.2024
(51) Int. Cl.: G01N 35/00, B25J 15/00, G01N 35/04

(54) **LABORATORY APPARATUS**

(71) Applicant: Beckman Coulter, Inc., Brea, CA 92821 (US)
(72) Inventor: Krafczyk, Thomas, 82140 Olching (DE); Adolf, Maximilian, 82418 Murnau (DE)
(74) Representative: Schaumburg und Partner Patentanwälte mbB

(57) **Abstract**

A laboratory apparatus (100) for handling a sample tube (114) comprises a clamping device (102) having at least two clamping arms (108, 110) configured to be moved to a closed state for clamping the sample tube (114) arranged in a working space (W) therebetween and to be moved to an open state for releasing the sample tube (114) in the working space. Each clamping arm (108, 110) comprises a contact area (128, 130) configured to be in contact with the sample tube (114) in the closed state and to be out of contact with the sample tube (114) in the open state. At least one of the clamping arms (108, 110) further comprises a mechanically biased pushing member (140, 142) which is retractable against a biasing force upon contact with the sample tube (114) arranged in the working space (W) when the clamping arms (108, 110) are moved from the open state to the closed state, and which is extendable by the biasing force to push against the sample tube (114) and prevent the sample tube (114) from being pulled out of the working space (W) due to unintentional adhesion to the contact area (128, 130) when the clamping arms (108, 110) are moved from the closed state to the open state.

## Description

### Technical field

The invention relates to a laboratory apparatus for handling sample tubes.

### Background

In scientific research and medical diagnostics, laboratory devices play a crucial role in ensuring precision, accuracy, and efficiency. Such devices encompass a wide range of equipment, each tailored to specific tasks such as sample preparation, analysis, and data collection. The advancement of laboratory devices has significantly enhanced the capabilities of laboratories, allowing for high-throughput processing and more reliable results.

An important category of laboratory devices includes automated liquid handling systems, which are essential for tasks requiring precise measurement and distribution of liquid samples. Among these systems, instruments are used to automate a so-called aliquoting process in which a sample is divided into smaller, equal parts (aliquots) for further analysis. For this, the sample is dispensed into pre-labeled tubes, the volume dispensed into each tube being precisely controlled to ensure uniform aliquots. Once the aliquots are dispensed, the tubes are provided with caps to preserve the integrity of the aliquots.

A laboratory apparatus configured to handle sample tubes in a manner described above comprises a clamping device with clamping arms which can be moved between a closed state and an open state. In the closed state, the sample tube is clamped between the clamping arms and thus fixed in a working space in which a cap is applied to the tube. As soon as the tube is capped, the clamping arms are opened to release the tube and transport it from the working space to a next handling station.

Subsequently, another tube is arranged in the working space and treated in the same way.

Each sample tube is usually provided with a label which makes it possible to clearly identify the aliquot contained in the sample tube. An adhesive is used to apply the label to a peripheral surface of the sample tube. When the sample tube is clamped between the clamping arms to fix the tube in the working space, the adhesive between the label and the peripheral surface of the sample tube may be partially squeezed out, leaving some adhesive along an edge of the label exposed on the peripheral surface of the sample tube. As a result, a contact area with which the respective clamping arm rests against the sample tube can become contaminated with adhesive residue, particularly over a large number of clamping cycles. If the clamping arm is contaminated with adhesive residue, a sample tube may stick to the clamping arm and thus be unintentionally pulled out of the working space together with the moving clamping arm when the clamping device is opened. In such a case, the automated workflow must be stopped in order to manually detach the sample tube from the clamping arm and to remove the adhesive residue from the clamping arm. This causes a loss of time and increased effort for monitoring the workflow.

### Summary

It is an object of the invention to provide a laboratory apparatus with a clamping device as described above, which reliably prevents a pre-labeled sample tube from being unintentionally removed from the working space when the clamping device is opened.

The above object is achieved by a laboratory apparatus according to claim 1. Advantageous embodiments are defined in the dependent claims and the following description.

A laboratory apparatus for handling a sample tube comprises a clamping device having at least two clamping arms configured to be moved to a closed state for clamping the sample tube arranged in a working space therebetween and to be moved to an open state for releasing the sample tube in the working space. Each clamping arm comprises a contact area configured to be in contact with the sample tube in the closed state and to be out of contact with the sample tube in the open state. At least one of the clamping arms further comprises a mechanically biased pushing member which is retractable against a biasing force upon contact with the sample tube arranged in the working space when the clamping arms are moved from the open state to the closed state, and which is extendable by the biasing force to push against the sample tube and prevent the sample tube from being pulled out of the working space due to unintentional adhesion to the contact area when the clamping arms are moved from the closed state to the open state.

The mechanically biased pushing member is configured to hold the sample tube in the working space even if there is adhesive residue on the clamping arm, which would otherwise cause the sample tube to stick to the clamping arm and therefore be pulled out of the working space together with the clamping arm when the latter opens to release the sample tube from the clamping. As a result, pre-labeled sample tubes can be reliably prevented from being removed from the working space when the clamping device is opened. This inhibits disruptions to the workflow when handling the sample tubes.

For instance, the workflow may include a step in which a cap is applied to the sample tube or removed therefrom while the sample tube is clamped between the clamping arms and thus fixedly arranged in the working space. This step is now protected against the sample tube being unintentionally dragged out of the working space when the clamping device is reopened. In the present context, the working space essentially represents a predetermined position in which the tube should ideally be arranged in order to perform the above-mentioned working step. The term "space" is intended to express that this predetermined working or interacting position can be provided with a certain tolerance within which a slight movement of the tube is possible without impairing the working step.

If there is a critical side in a sense that adhesive residue is only expected to be unintentionally squeezed out of the labels on this side, it may be sufficient to provide a mechanically biased pushing member only for the clamping arm(s) arranged on the critical side. However, in order to ensure in a particularly reliable manner that the sample tubes remain in the working space when the clamping device is opened, it may be preferred to equip each clamping arm with such a pushing member.

Preferably, the at least one clamping arm comprises a recess in which a resilient biasing element and the pushing member are arranged. The pushing member may be retractable into the recess against the biasing force exerted by the biasing element and at least partially extendable out of the recess by the biasing force exerted by the biasing element. In this embodiment, the mechanically biased pushing member is retracted into the clamping arm in the closed state of the clamping device. This favors a compact design of the laboratory apparatus.

For example, the resilient biasing element may be formed from a compression spring or a similar element that can be integrated at low costs.

According to a preferred configuration, the at least one pushing member comprises a shaft portion and a contact portion enlarged relative thereto. The shaft portion may have a bore in which the biasing element is mounted. Accommodating the biasing element within the bore of the shaft portion is advantageous in terms of a compact design. The same applies if, as mentioned above, there is a recess in the clamping arm and the shaft portion is accommodated in this recess. In addition, the shape of the enlarged contact portion of the pressure member may be adapted to the shape of the contact area of the same pressure member, so that both of the above-mentioned elements have equally good contact with the sample tube in the closed state.

It should be noted that the above configuration, in which the biasing element such as a compression spring is mounted in the bore formed in the shaft portion of the pushing member, is merely an example. For example, if a different type of biasing element such as a bent spring steel is used, another configuration may be used in which the above bore accommodating the biasing element is not needed.

Preferably, the pushing member and the contact area of the at least one clamping arm are arranged adjacent to each other with respect to a direction along which the sample tube is to be aligned with its longitudinal axis in the working space. According to this embodiment, the pushing member engages with the sample tube close to a region in which the contact area of the clamping arm is in contact with the sample tube, i.e. in which the sample tube may inadvertently adhere to the clamping arm due to adhesive residue. Accordingly, the pushing member is particularly effective in preventing the sample tube from inadvertently sticking to the clamping arm due to adhesive residue when the clamping device is opened.

In a preferred embodiment, the pushing member of the at least one clamping arm projects beyond the contact area toward the working space when the pushing member is extended. This ensures that the pushing member continues to act on the sample tube after the contact area of the clamping arm has already detached from the sample tube while the clamping device is being opened. Thus, the sample tube is held securely in the working space upon opening the clamping device.

The two clamping arms may be arranged on both sides of a plane which lies between the clamping arms and passes through the working space. Here, the two clamping arms grip the sample tube from two opposite sides in relation to a plane that contains the working space, i.e. the predetermined working position (which may be subject to tolerances as mentioned above). As a result, the sample tube is locked particularly reliably in that position.

Preferably, the two clamping arms are configured to be mirror-symmetrical with respect to said plane. In this example, each clamping arm has a pushing member as described above. This ensures a compact design and, at the same time, particularly effective protection against the sample tube being accidentally pulled out of the working space.

According to a preferred embodiment, each clamping arm is pivotable or linearly movable between the closed state and the open state.

In case of linearly movable clamping arms, a straight travel path is provided along which each clamping arm moves upon opening the clamping device. Such a straight travel path ensures that a clamping force is transferred particularly effectively from the respective clamping arm to the sample tube.

If the clamping arms are pivotable as mentioned above, each clamping arm may comprise a gear portion next to a pivot axis at a first end of the clamping arm, wherein said gear portion engages the gear portion of the other clamping arm. The contact area and the pushing member may be located at an opposite second end of the clamping arm. Such a pivotable configuration is advantageous in terms of space requirements, resulting in a particularly compact design.

Preferably, each contact area and/or each pushing member has a concavely rounded contact surface which is adapted to a shape of the sample tube to be clamped. Such a shape supports keeping and moving the sample tube in a concentric position with respect to a carrier which is used to hold and transport the sample tube. However, the above shape is merely to be understood as an example. Other shapes can be used, adapted to specific requirements.

Each contact area may be made of a high-friction material and/or each pushing member may be made of a low-friction material. The use of a high friction material for each contact surface ensures that unintended movements of the sample tube are avoided when the sample tube fixed between the clamping arms is acted upon in a planned manner. For example, when screwing/unscrewing a cap onto/from the sample tube, rotation of the sample tube is avoided. Such a high-friction material may be e.g. a rubber material.

On the other hand, if a low-friction material is used for each pushing member, the latter advantageously causes no counterforce in relation to the screwing/unscrewing step. An example of a preferred low-friction material is polytetrafluoroethylene (PTFE).

Each clamping arm may comprise a pad, i.e. a block, on which the contact area is formed. The pad (as a whole or only in a region of its contact area) may be made of a high-friction material such as rubber.

The laboratory apparatus may comprise a control unit which is configured to control the clamping device for simultaneously closing and opening the clamping arms.

Preferably, the control unit is configured to control the clamping device to open the clamping arms from the closed state initially at a first speed and subsequently at a second speed which is higher than the first speed. With this configuration, the clamping arms open more slowly at first when the clamping arms are about to detach from the sample tube. Therefore, the adhesive bond is allowed to release naturally at the beginning of the opening motion, thus reducing the risk of tube displacement and keeping the tube stable. Subsequently, the clamping arms open faster which is beneficial in terms of processing time. For example, a stepwise opening motion may be provided with two distinct opening speeds, i.e. the lower first speed at the beginning of the motion and the higher second speed afterwards.

According to a preferred embodiment, the laboratory apparatus comprises a handling device configured to apply a cap to the sample tube and/or to remove a cap from the sample tube clamped in the working space. The handling device is supported by the mechanically biased pushing member(s) in capping and/or decapping a large number of sample tubes without any interruption of the workflow due to accidental tube adhesion.

There are various ways to seal a sample tube by a cap. The use of a screw cap is only one of several options. Other options include the use of a push cap, an insert cap, a foam cap or similar. However, due to the nature of the torque applied when using a screw cap, the risk for the adhesive being pressed into the clamping partner is particularly high in case of a screw cap.

### Short Description of the Figures

Hereinafter, a specific embodiment is described referring to the drawings, wherein:
- Figure 1: is a block diagram showing a laboratory apparatus according to an embodiment;
- Figure 2: is a perspective view showing a clamping device of the laboratory apparatus according to an embodiment in a partially open state with a sample tube held in a working space by means of two pushing members;
- Figure 3: is a partially sectioned plain view showing the clamping device in the partially open state with the sample tube held in the working space by means of the pushing members;
- Figure 4: is a perspective view showing a part of a clamping arm including a pad and a pushing member according to the embodiment, wherein the pushing member is retracted; and
- Figure 5: is a perspective view corresponding to Figure 4, wherein the pushing member is extended.

### Detailed Description

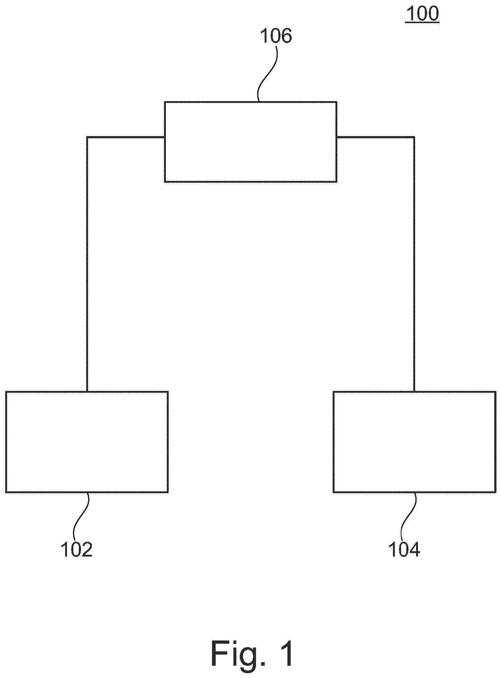

Figure 1 is a block diagram showing a laboratory apparatus 100 according to an embodiment. The laboratory apparatus 100 may be part of an automated liquid handling system capable of automating an aliquoting process in which a liquid sample is dispensed into pre-labeled sample tubes. A volume dispensed into each sample tube is precisely controlled to ensure uniform aliquots.

The laboratory apparatus 100 shown in Figure 1 may serve to perform a step within the above-mentioned process in which a cap is screwed onto each sample tube. For this purpose, the laboratory apparatus 100 comprises a clamping device 102 which is used to hold the sample tube in place. The laboratory apparatus 100 further comprises a handling device 104 that is configured to screw the cap onto the sample tube held by the clamping device 102.

It should be noted that the above use case is to be understood merely as an example. For instance, the handling device 104 can of course also be used to unscrew a cap from the respective sample tube.

As shown in Figure 1, the laboratory apparatus 100 includes a control unit 106 which may be configured to control the overall operation of the laboratory apparatus 100. In particular, the control unit 106 serves to control the clamping device 102, as described below in more detail.

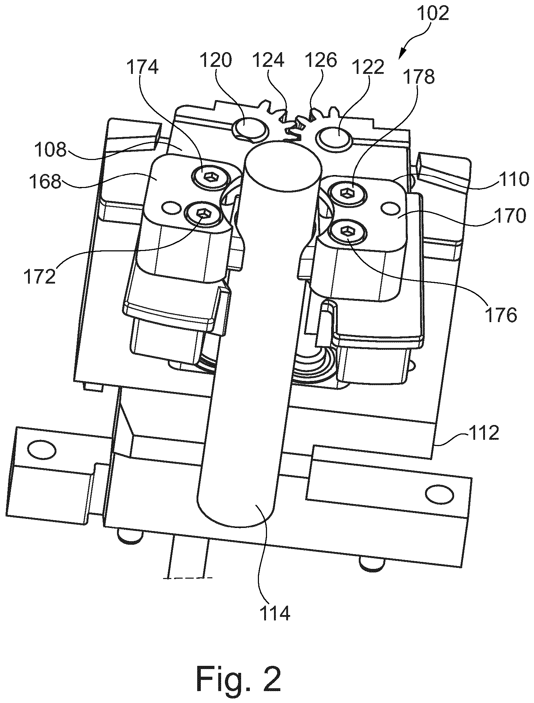

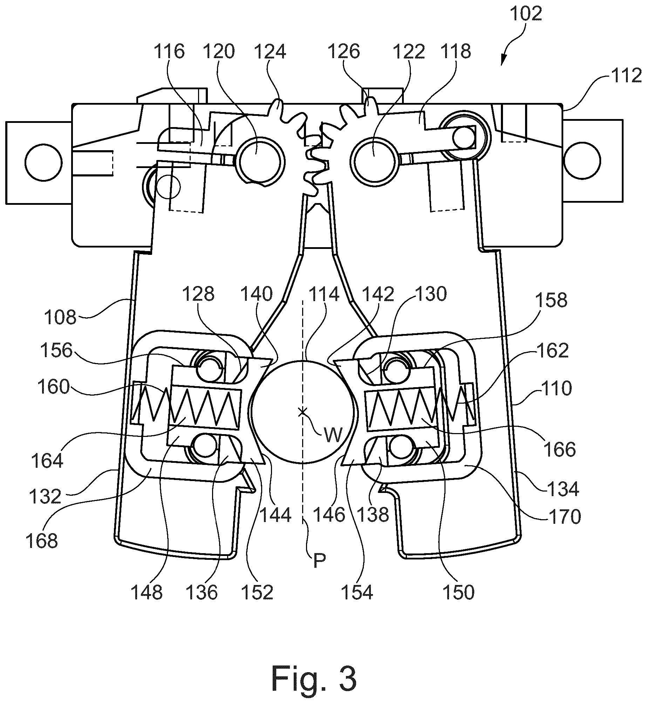

Figures 2 and 3 show an exemplary configuration of the clamping device 102 in a perspective view and a partially sectioned plain view, respectively. As can be seen in Figures 2 and 3, the clamping device 102 includes two substantially identical clamping arms 108, 110 which are moved toward each other to close the clamping device 102. Conversely, the clamping arms 108, 110 are moved away from each other to open the clamping device 102. The clamping arms 108, 110 are mounted on a carrier 112. In Figures 2 and 3 the clamping device 102 is shown in a partially open state after the clamping arms 108, 110 have initially been moved out of a closed state in which a sample tube 114 has been fixed between the clamping arms 108, 110.

As can be seen in the plain view of Figure 3, the clamping arms 108, 110 may be arranged on both sides of a plane P that is perpendicular to a drawing plane of Figure 3. In the specific embodiment of Figure 3, the clamping arms 108, 110 are configured to be approximately mirror-symmetrical with respect to the plane P without being limited thereto. Accordingly, the control unit 106 (see Figure 1) causes the clamping arms 108, 110 to open and close simultaneously in a mirror-symmetrical pivot movement relative to the plane P. The control unit 106 may further be configured to open the clamping arms 108, 110 from the closed state initially at a lower first speed and subsequently at a higher second speed.

When the sample tube 114 is clamped between the two clamping arms 108, 110, it is arranged in a working space W. The latter essentially defines a predetermined working or interacting position on the plane P in which the sample tube 114 must be located so that the intended interaction in the clamped state can take place, i.e. in which the handling device 104 is enabled to arrange the cap on the sample tube 114. As mentioned above, the term working "space" is intended to express that the working or interacting position may be subject to a certain tolerance within which a slight movement of the sample tube 114 may occur that is not related to the problem of adhesive residue discussed in the present context. When the sample tube 114 is correctly clamped between the clamping arms 108, 110 in the working space W, the sample tube 114 is aligned with its longitudinal axis in a direction which extends in the plane P and is perpendicular to the drawing plane of Figure 3.

According to the embodiment shown in Figures 2 and 3, the clamping arms 108, 110 are designed such that they perform a pivoting movement to open and close the clamping device 102. In order to enable such a pivoting movement, each clamping arm 108, 110 is mounted with a first end 116, 118 pivotable about a pivot axis 120, 122. Each clamping arm 108, 110 comprises a gear portion 124, 126 in close proximity to the corresponding pivot axis 120, 122. The clamping arms 108, 110 are in mutual engagement with their gear portions 124, 126 so that the clamping arms 108, 110 can be pivoted toward and away from each other by means of a drive unit in order to open and close the clamping device 102. The drive unit, e.g. a motor (not shown in the Figures), is operated under the control of the control unit 106.

The pivotal arrangement described above is only an example. For instance, the clamping arms 108, 110 may also be designed to linearly move toward and away from each other to close and open the clamping device 102.

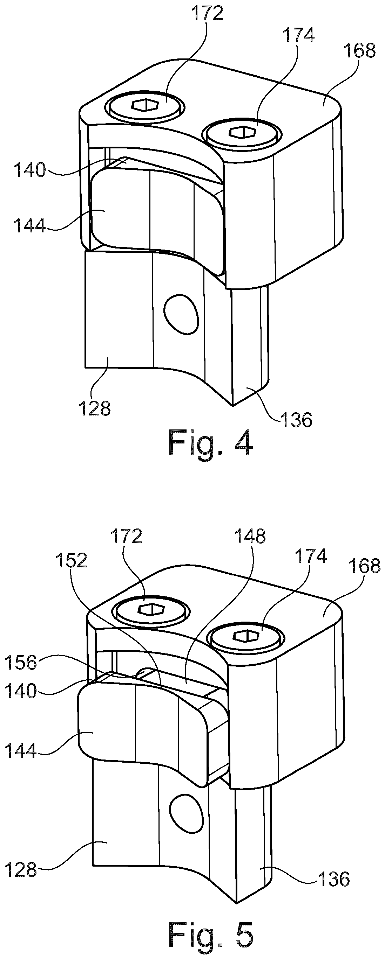

To securely fix the sample tube 114 in the working space W, each clamping arm 108, 110 has a contact area 128, 130, as can be seen in Figure 3 and in Figures 4 and 5, which show only a part of the clamping arm 108. Since the clamping arms 108, 110 are essentially identical, the following explanations of the clamping arm 108 in Figures 4 and 5 also apply to the other clamping arm 110.

Each contact area 128, 130 is located at a freely pivotable second end 132, 134 of the respective clamping arm 108, 110, which is opposite to the first end 116, 118. In the closed state of the clamping device 102, the contact areas 128, 130 are in contact with a circumferential surface of the sample tube 114. The contact areas 128, 130 lose contact with the sample tube 114 when the clamping device 102 opens. The partially open state shown in Figures 2 and 3 is present after the clamping arms 108, 110 have been pivoted out of the closed state in an initial opening movement. The clamping device 102 is designed such that in this partially open state the contact areas 128, 130 of the clamping arms 108, 110 are no longer in contact with the sample tube 114.

According to the present example, each clamping arm 108, 110 comprises a pad 136, 138 in the form of a block. Each pad 136, 138 has an exposed contact surface that faces the working space W and forms the respective contact area 128, 130. The contact area 128, 130 of each pad 136, 138 has a concavely rounded shape that is at least roughly adapted to the shape of the peripheral surface of the sample tube 114 to be clamped. Each pad 136, 138 may be made of a high-friction material such a rubber to ensure non-slip contact with the sample tube 114.

As explained above, upon handling pre-labeled sample tubes, the problem may arise that adhesive is released on the circumferential surface of the respective sample tube 114 when the contact areas 128, 130 of the clamping arms 108, 110 exert a torque on the label applied to the sample tube 114 during screw cap application. As a result, adhesive residue may accumulate on the contact area(s) 128, 130 of the clamping arm(s) 108, 110, in particular as the number of processed sample tubes increases. Because of the adhesive residue, there is a risk that the sample tube 114 currently being processed will get stuck to one of the clamping arms 108, 110 when the clamping device 102 is reopened after capping. Thus, the sample tube 114 will be unintentionally pulled out of the working space W together with the opening clamping arm 108, 110, and the workflow must be interrupted.

To solve this problem in the present embodiment, each of the clamping arms 108, 110 is provided with a mechanically biased pushing member 140, 142 which serves to actively push the sample tube 114 away from the pad 136, 138 to which the sample tube 114 might adhere due to adhesive residue. The respective pushing member 140, 142 is configured to be retracted against a biasing force upon contact with the peripheral surface of the sample tube 114 when the clamping arm 108, 110 is closed and thus moved toward the sample tube 114. Figure 4 illustrates the pushing member 140 retracted as explained above, wherein the sample tube 114 is omitted.

When the clamping arm 108, 110 is opened after capping, the pushing member 140, 142 is advanced by the biasing force. Thus, the pushing member 140, 142 remains in contact with the sample tube 114 at the beginning of the opening movement of the clamping arm 108, 110 and thus pushes against the sample tube 114 during this initial arm movement. A force, with which the pushing member 140, 142 pushes against the sample tube 114, and a maximum extension distance, by which the pushing member 140, 142 is extended during the initial opening movement of the clamping arm 108, 110, are dimensioned such that, in the event that the sample tube 114 would adhere to the pad 136, 138 due to adhesive residue, it is ensured that the pushing member 140, 142 releases the sample tube 114 from the pad 136, 138 so that the sample tube 114 remains in the working space W. As a result, the sample tube 114 is prevented from being pulled out of the working space W when the clamping arm 108, 110 is opened. Figure 5 shows the pushing member 140 maximally extended as explained above. The sample tube 114 is also omitted in Figure 5.

The pushing member 140, 142 comprises a contact surface 144, 146 having a concavely rounded shape which is at least roughly adapted to the shape of the peripheral surface of the sample tube 114 (which may also be the case with the pad 136, 138, as mentioned above). The pushing member 140, 142 and the pad 136, 138 of each clamping arm 108, 110 are arranged adjacent to each other with respect to a direction along which the longitudinal axis of the sample tube 114 is oriented in the working space W (which is a vertical direction in Figures 4 and 5). Accordingly, the pushing member 140, 142 is located close to the pad 136, 138 to which the sample tube 114 might inadvertently stick due to adhesive residue. This spatial arrangement enables the pushing member 140, 142 to effectively release an adhesion of the sample tube 114 to the pad 136, 138, if required.

Hereinafter, an exemplary configuration is described which serves to provide a biasing force ensuring that each pushing member 108, 110 is capable of holding the sample tube 114 in the working space W in the event of an unintentional tube adhesion due to adhesive residue, as explained above.

As can best be seen in Figures 3 and 5, each pushing member 140, 142 comprises a shaft portion 148, 150 and a contact portion 152, 154 which is enlarged in comparison to the shaft portion 148, 150. An end face of the contact portion 152, 154 facing the working space W forms the contact surface 144, 146 of the pushing member 140, 142. The shaft portion 148, 150 of each pushing member 140, 142 is movably arranged in a recess 156, 158. For example, the recess 156, 158 may be formed in a receiving block 168, 170 that is mounted on a top surface of the clamping arm 108, 110 by means of screws 172, 174 and 176, 178, respectively. The recess 156, 158 also accommodates a resilient biasing element 160, 162 which is, for example, formed of a compression spring. More specifically, the biasing element 160, 162 is mounted in a bore 164, 166 formed in the shaft portion 148, 150 of the pushing member 140, 142 and accommodated together with the shaft portion 148, 150 in the recess 156, 158.

In the open state of the clamping device 102, the pushing member 140, 142 is out of contact with the sample tube 114, and the biasing element 160, 162 formed of a compression spring is in its natural, uncompressed state. In this state, the biasing element 160, 162 has a resting or free length defining its maximum extension distance by which the pushing member 140, 142 projects beyond the contact area 128, 130 of the pad 136, 138 toward the working space W, as illustrated in Figure 5. When the clamping device 102 is closed, the pushing member 140, 142 comes into contact with the sample tube 114, and a compressive force is applied to the biasing element 160, 162 so that the biasing element 160, 162 is shortened. As the biasing element 160, 162 is compressed, it stores energy. When the clamping device 102 is reopened, the compressive force is removed again, and the stored energy is released by the biasing element 160, 162 by exerting the biasing force on the sample tube 114. The biasing force ensures that the sample tube 114 remains in the working space W even if adhesive residue on the pad 136, 138 of the respective clamping arm 108, 110 causes the sample tube 114 to adhere unintentionally to the pad 136, 138.

Each pushing member 140, 142 may be made of a low-friction material such as PTFE. Using such a material is advantageous as it does not cause any counterforce when the cap is applied to the sample tube 114 or removed therefrom.

The above explanations relate only to a specific embodiment, without limiting the invention thereto. For example, in the above embodiment, the clamping device comprises two clamping arms. However, it is also possible to provide more than two clamping arms. Further, in the above embodiment, each clamping arm comprises a pushing member. However, it is also conceivable that only one or at least not all clamping arms are provided with such a pushing member.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: laboratory apparatus
- 102: clamping device
- 104: handling device
- 106: control unit
- 108, 110: clamping arm
- 112: carrier
- 114: sample tube
- 116, 118: first end of clamping arm
- 120, 122: pivot axis
- 124, 126: gear portion
- 128, 130: contact area
- 132, 134: second end of clamping arm
- 136, 138: pad
- 140, 142: pushing member
- 144, 146: contact surface of pushing member
- 148, 150: shaft portion
- 152, 154: contact portion
- 156, 158: recess
- 160, 162: biasing element
- 164, 166: bore
- 168, 170: receiving block
- 172-178: screw
- W: working space
- P: plane

## Claims

1. A laboratory apparatus (100) for handling a sample tube (114), comprising:
a clamping device (102) having at least two clamping arms (108, 110) configured to be moved to a closed state for clamping the sample tube (114) arranged in a working space (W) therebetween and to be moved to an open state for releasing the sample tube (114) in the working space,
wherein each clamping arm (108, 110) comprises a contact area (128, 130) configured to be in contact with the sample tube (114) in the closed state and to be out of contact with the sample tube (114) in the open state, and
wherein at least one of the clamping arms (108, 110) further comprises a mechanically biased pushing member (140, 142) which is retractable against a biasing force upon contact with the sample tube (114) arranged in the working space (W) when the clamping arms (108, 110) are moved from the open state to the closed state, and which is extendable by the biasing force to push against the sample tube (114) and prevent the sample tube (114) from being pulled out of the working space (W) due to unintentional adhesion to the contact area (128, 130) when the clamping arms (108, 110) are moved from the closed state to the open state.

2. The laboratory apparatus (100) according to claim 1, wherein the at least one clamping arm (108, 110) comprises a recess (156, 158) in which a resilient biasing element (160, 162) and the pushing member (140, 142) are arranged, and
wherein the pushing member (140, 142) is retractable into the recess (156, 158) against the biasing force exerted by the biasing element (160, 162) and at least partially extendable out of the recess (156, 158) by the biasing force exerted by the biasing element (160, 162).

3. The laboratory apparatus (100) according to claim 1 or 2, wherein the at least one pushing member (140, 142) comprises a shaft portion (148, 150) and a contact portion (152, 154) enlarged relative thereto, the shaft portion (148, 150) having a bore (164, 166) in which the biasing element (160, 162) is mounted.

4. The laboratory apparatus (100) according to any one of the preceding claims, wherein the pushing member (140, 142) and the contact area (128, 130) of the at least one clamping arm (108, 110) are arranged adjacent to each other with respect to a direction along which the sample tube (114) is to be aligned with its longitudinal axis in the working space (W).

5. The laboratory apparatus (100) according to any one of the preceding claims, wherein the pushing member (140, 142) of the at least one clamping arm (108, 110) projects beyond the contact area (128, 130) toward the working space (W) when the pushing member (140, 142) is extended.

6. The laboratory apparatus (100) according to any one of the preceding claims, wherein the two clamping arms (108, 110) are arranged on both sides of a plane (P) which lies between the clamping arms (108, 110) and passes through the working space (W).

7. The laboratory apparatus (100) according to claim 6, wherein the two clamping arms (108, 110) are configured to be mirror-symmetrical with respect to said plane (P).

8. The laboratory apparatus (100) according to any one of the preceding claims, wherein each clamping arm (108, 110) is pivotable or linearly movable between the closed state and the open state.

9. The laboratory apparatus (100) according to claim 8, wherein, in case that each clamping arm (108, 110) is pivotable, each clamping arm (108, 110) comprises a gear portion (124, 126) next to a pivot axis (120, 122) at a first end of the clamping arm (108, 110), said gear portion (124, 126) engaging the gear portion of the other clamping arm (108, 110), and wherein the contact area (128, 130) and the pushing member (140, 142) are located between the pivot axis (120, 122) and an opposite second end of the clamping arm (108, 110).

10. The laboratory apparatus (100) according to any one of the preceding claims, wherein each contact area (128, 130) and/or each pushing member (140, 142) has a concavely rounded contact surface which is adapted to a shape of the sample tube (114) to be clamped.

11. The laboratory apparatus (100) according to any one of the preceding claims, wherein each contact area (128, 130) is made of a high-friction material and/or each pushing member (140, 142) is made of a low-friction material.

12. The laboratory apparatus (100) according to any of the preceding claims, wherein each clamping arm comprises a pad (136, 138) on which the contact area (128, 130) is formed.

13. The laboratory apparatus (100) according to any one of the preceding claims, comprising a control unit (106) configured to control the clamping device (102) for simultaneously closing and opening the clamping arms (108, 110).

14. The laboratory apparatus (100) according to claim 13, wherein the control unit (106) is configured to control the clamping device (102) to open the clamping arms (108, 110) from the closed state initially at a first speed and subsequently at a second speed which is higher than the first speed.

15. The laboratory apparatus (100) according to any one of the preceding claims, comprising a handling device (104) configured to apply a cap to the sample tube (114) and/or to remove a cap from the sample tube (114) clamped in the working space (W).
